Europäisches Patentamt

European Patent Office

Office européen des brevets

(11) Numéro de publication: **0 418 192 A2**

# DEMANDE DE BREVET EUROPEEN

(21) Numéro de dépôt: **90810627.1**

(22) Date de dépôt: **21.08.90**

(51) Int. Cl.⁵: **B23P 19/04**

(30) Priorité: **11.09.89 CH 3269/89**

(43) Date de publication de la demande:
**20.03.91 Bulletin 91/12**

(84) Etats contractants désignés:
**AT BE CH DE DK ES FR GB GR IT LI LU NL SE**

(71) Demandeur: **MASCON S.A.**
**Grande-Rue 22**
**CH-1204 Genève(CH)**

(72) Inventeur: **Ullmann, Jerzy J.W.**
**Rue de l'Ancien Stand, 32**
**CH-1820 Montreux(CH)**

(74) Mandataire: **Meylan, Robert Maurice et al**
**c/o BUGNION S.A. 10, route de Florissant**
**Case Postale 375**
**CH-1211 Genève 12 - Champel(CH)**

(54) Dispositif d'assemblage d'au moins deux pièces à cinématique continue.

(57) Il comprend un socle (1) supportant une colonne verticale (2), un arbre creux (3) coaxial à la colonne (2) et muni de moyens (M, 13) pour être entraîné en rotation. L'arbre (3) est solidaire de deux disques rotatifs (9, 10) munis de moyens pour supporter les pièces à assembler. Deux plateaux (4, 5) parallèles et synchrones aux deux disques (9, 10) supportent à proximité de leur périphérie des tiges (6′, 6″) déplaçables verticalement. L'une des extrémités de chaque tige (6′, 6″) est guidée par une came ou rampe (7′, 7″) se trouvant sur une pièce cylindrique (8′, 8″) fixe inférieure respectivement supérieure. Les deux plateaux (4, 5) sont d'une pièce avec l'arbre de rotation (3).

# DISPOSITIF D'ASSEMBLAGE D'AU MOINS DEUX PIÈCES À CINÉMATIQUE CONTINUE

La présente invention concerne un dispositif d'assemblage d'au moins deux pièces, à cinématique continue, les pièces à assembler se déplaçant en même temps que le poste de travail réalisant l'assemblage, comprennant un socle supportant une colonne verticale, un arbre creux coaxial à la colonne muni de moyens pour être entraîné en rotation, ledit arbre étant solidaire de deux disques rotatifs munis de moyens pour supporter les pièces à assembler, et de deux plateaux parallèles et synchrones aux deux disques le premier plateau étant disposé, dans le sens de la hauteur, au dessous du disque inférieur et le second au dessus du disque supérieur, chaque plateau supportant à proximité de sa périphérie des tiges déplaçables verticalement, chaque tige étant munie à l'une de ses extrémité de moyens contribuant à l'assemblage de la pièce se trouvant à la verticale sur le disque adjacent avec une pièce se trouvant sur l'autre disque, les secondes extrémités desdites tiges du plateau inférieur respectivement du plateau supérieur étant guidées par une came ou rampe se trouvant sur une pièce cylindrique fixe inférieure respectivement supérieure.

Il existe actuellement plusieurs types d'installations d'assemblage pour toutes sortes de pièces, par exemple mouvement d'une montre, micro-interrupteur, seringue, etc. Ces intallations sont étudiées pour effectuer l'assemblage d'un produit déterminé fini ou semi-fini sur la base des différents constituants du produit fini ou semi-fini et des étapes successives de leurs assemblages.

Des dispositifs permettant d'effectuer les opérations précitées et similaires au dispositif défini precédemment sont décrits dans les demandes de brevet françaises 2 43 993 et 2 345 647. Le dispositif décrit dans le deuxième de ces documents concerne précisémment l'assemblage du clapet d'un récipient à aérosol.

En fonction de l'assemblage à réaliser, aussi bien les moyens dont sont munies les tiges que les cames, doivent être changés puisque ces dispositifs ne sont pas prévus uniquement pour un seul assemblage, mais ils doivent pouvoir effectuer un certain nombre d'assemblages différents. Lors de ces modifications, il est absolument primordial que les tiges se trouvant sur les deux plateaux puissent se trouver en registre parfait, c'est-à-dire que deux tiges se trouvant respectivement sur les deux plateaux doivent être sur la même verticale pour assurer, d'une part, un parfait assemblage, et d'autre part, éviter des déformations des pièces assemblées qui seraient dûes à un décalage horizontal de deux pièces à réunir.

Lorsque les deux plateaux sont montés sur un axe ou un arbre de manière amovible, la mise en place de ces plateaux avec précision présente quelques inconvénients, à savoir : un travail très long et minutieux pour régler le registre des deux plateaux supportant les tiges; le danger que le registre des deux plateaux soit déréglé de manière intempestive nécessitant l'arrêt du dispositif pour régler encore une fois le registre; prévoir des moyens permettant de coupler les plateaux sur l'arbre d'entraînement de manière précise et permettant de régler la position relative des deux plateaux minutieusement, ces moyens étant onéreux.

La présente invention a pour but de pallier les inconvénients susmentionnés en proposant un dispositif dans lequel les deux plateaux supportant les tiges sont toujours en registre parfait.

Le dispositif selon l'invention est caractérisé par le fait que les deux plateaux sont d'une pièce avec l'arbre de rotation.

L'avantage de ce dispositif est que les plateaux étant d'une pièce avec l'arbre de rotation lors de la fabrication, il ne peut y avoir de glissement angulaire entre les plateaux. Après la fabrication de l'arbre avec les deux plateaux, il suffit de procéder au perçage des alésages respectifs en parfait alignement avant de mettre en place les tiges. De cette manière, le seul réglage éventuel à effectuer lors de la transformation du dispositif (modification de came, de support, etc.) est la position des disques supportant les éléments à assembler. Même dans ce cas, le réglage est beaucoup plus facile, car se faisant par rapport à deux plateaux fixes. D'autre part, les deux disques ne sont pas soumis à des contraintes aussi élevées que les plateaux supportant les tiges d'assemblage, puisque les disques ne font que supporter des pièces relativement légères, et un déréglage intempestif est peu probable.

Avec cette disposition, on évite le long travail de mise en place des plateaux lors de chaque modification du dispositif, on élimine les déréglages intempestifs dûs aux contraintes supportées par les deux plateaux ou d'autres raisons accidentelles, on n'a pas besoin de prévoir de moyens précis pour coupler les plateaux à l'arbre rotatif.

Selon une exécution, l'entraînement en rotation de l'arbre est obtenu par un moteur couplé cinématiquement à au moins un des plateaux, par exemple soit par une courroie dentée, soit par un train d'engrenages, dans ces cas le plateau (ou les plateaux) est muni sur sa périphérie d'une denture.

D'autres avantages du dispositif selon l'invention sont la simplicité aussi bien pour le montage que pour l'entraînement en rotation de l'arbre.

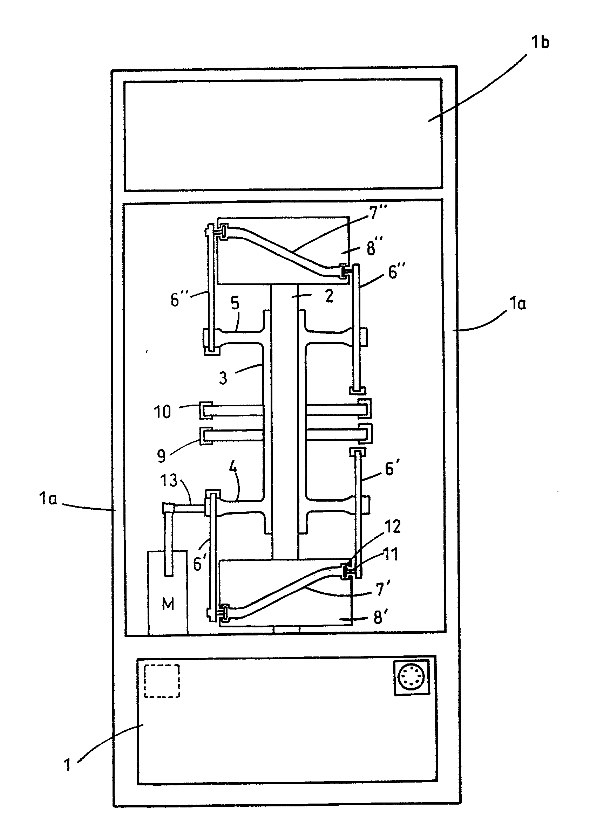

Une exécution du dispositif selon l'invention sera décrite à l'aide du dessin annexé.

La figure unique représente une vue latérale schématique d'un dispositif selon l'invention.

Il est composé d'un socle 1 supportant une colonne verticale 2. Sur la colonne 2 est monté un arbre creux 3 muni à proximité de ses deux extrémités d'un plateau inférieur 4 et d'un plateau supérieur 5 d'une pièce avec l'arbre. Les plateaux 4 et 5 sont munis à proximité de leur périphérie d'alésages verticaux dans lesquels peuvent coulisser verticalement des tiges 6′ et 6″ destinées à supporter des moyens permettant l'assemblage de deux pièces. Les tiges 6′ sont guidées par leur extrémité inférieure et les tiges 6″ par leur extrémité supérieure par une came 7′, respectivement 7″ ou une rampe, disposée sur la surface périphérique d'une pièce cylindrique 8′, respectivement 8″ fixée aux extrémités inférieure respectivement supérieure de la colonne. Deux disques 9 et 10 sont fixés amoviblement sur l'arbre 3 pour être entraînés en rotation synchrone avec les plateaux 4 respectivement 5. Les disques 9 et 10 transportent les pièces à assembler.

Chaque tige 6′, respectivement 6″ est munie à son extrémité de guidage d'un axe 11 perpendiculaire à la tige et d'un galet 12 qui s'engage dans la came 7′, respectivement 7″ pour les guider.

L'entraînement de l'arbre est obtenu au moyen d'un moteur M disposé sur ou sous le socle 1 lié cinématiquement au plateau inférieur 4 par soit une courroie dentée 13, soit un train d'engrenages (non représenté), le plateau 4 étant muni sur sa périphérie d'une denture. Il est également possible d'entraîner en rotation l'arbre 3 en agissant sur les deux plateaux 4 et 5.

Il est bien entendu possible de prévoir d'autres moyens pour entraîner l'arbre en rotation.

Le socle 1 peut abriter ou supporter différents moyens et dispositifs d'alimentation, régulation, etc, permettant un fonctionnement du dispositif d'assemblage. Il peut également être complété en hauteur par des colonnes la supportant une structure supérieure destinée à protéger le dispositif et servir le cas échéant de support à d'autres moyens couplés au dispositif d'assemblage, nous citerons à titre d'exemple les dispositifs d'alimentation des disques 9, 10 en pièces. La structure supérieure peut abriter par exemple le panneau et dispositif de commande du dispositif.

En résumé, l'avantage essentiel de l'invention est l'utilisation d'un arbre fait d'une pièce avec les deux plateaux supportant les tiges, ce qui permet d'avoir en permanence et dans toutes les conditions un registre parfait entre les deux plateaux sans risque que le registre soit déréglé.

## Revendications

Dispositif d'assemblage d'au moins deux pièces, à cinématique continue, les pièces à assembler se déplaçant en même temps que le poste de travail réalisant l'assemblage, comprennant un socle supportant une colonne verticale, un arbre creux coaxial à la colonne muni de moyens pour être entraîné en rotation, ledit arbre étant solidaire de deux disques rotatifs munis de moyens pour supporter les pièces à assembler, et de deux plateaux parallèles et synchrones aux deux disques le premier plateau étant disposé, dans le sens de la hauteur, au dessous du disque inférieur et le second au dessus du disque supérieur, chaque plateau supportant à proximité de sa périphérie des tiges déplaçables verticalement, chaque tige étant munie à l'une de ses extrémité de moyens contribuant à l'assemblage de la pièce se trouvant à la verticale sur le disque adjacent avec une pièce se trouvant sur l'autre disque, les secondes extrémités desdites tiges du plateau inférieur respectivement du plateau supérieur étant guidées par une came ou rampe se trouvant sur une pièce cylindrique fixe inférieure respectivement supérieure, caractérisé par le fait que les deux plateaux sont d'une pièce avec l'arbre de rotation.

2. Dispositif selon la revendication 1, caractérisé par le fait que les moyens pour entraîner en rotation l'arbre comprennent un moteur lié cinématiquement à l'un au moins des plateaux.

3. Dispositif selon la revendication 2, caractérisé par le fait que le plateau est muni sur sa périphérie de dents et est couplé cinématiquement au moteur par un train d'engrenages.

4. Dispositif selon la revendication 2, caractérisé par le fait que le moteur est lié cinématiquement au plateau par une courroie.